# EUROPÄISCHE PATENTSCHRIFT

(11) **EP 3 431 707 B1**
(45) Veröffentlichungstag und Bekanntmachung des Hinweises auf die Patenterteilung: **03.03.2021**
(21) Anmeldenummer: 18178403.4
(22) Anmeldetag: 19.06.2018
(51) Int. Cl.: F01D 5/14, F03B 3/12, F01D 9/04

(54) **SCHAUFEL, SCHAUFELKRANZ, SCHAUFELKRANZSEGMENT UND STRÖMUNGSMASCHINE**
BLADE, BLADE RING, BLADE RING SEGMENT AND TURBOMACHINE
AUBE, COURONNE D'AUBES, SEGMENT DE COURONNE D'AUBES ET TURBOMACHINE

(30) Priorität: 19.07.2017 DE 102017212310
(43) Veröffentlichungstag der Anmeldung: 23.01.2019
(73) Patentinhaber: MTU Aero Engines AG, 80995 München (DE)
(72) Erfinder: Ramm, Günter, 82223 Eichenau (DE); Gündogdu, Yavuz, 85737 Ismaning (DE)

(56) Entgegenhaltungen:
- WO-A2-2009/103528
- US-A1- 2014 369 841
- US-B2- 6 572 335
- L. C Wright: "Blade selection for a modern axial-flow compressor", , 1. Januar 1974 (1974-01-01), XP055527941, Gefunden im Internet: URL:https://ntrs.nasa.gov/archive/nasa/cas i.ntrs.nasa.gov/19750003128.pdf [gefunden am 2018-11-28]

## Beschreibung

Die vorliegende Erfindung betrifft eine Schaufel, insbesondere eine Turbinen- oder Verdichterschaufel, die als Leit- oder Laufschaufel ausgeführt sein kann, einen Schaufelkranz und ein Schaufelkranzsegment jeweils für eine Gasturbine sowie eine Gasturbine.

Strömungsmaschinen wie Flugzeugtriebwerke und stationäre Gasturbinen haben zur Einstellung optimaler Betriebsbedingungen in ihrem Strömungskanal (der auch als "Ringraum" bezeichnet wird) häufig mindestens einen Schaufelkranz, beispielsweise einen Laufschaufelkranz. Daneben können auch ein oder mehrere Leitschaufelkränze vorgesehen sein. Jeder Leit- und/oder Laufschaufelkranz kann aus einzelnen Schaufelkranzsegmenten aufgebaut sein, die jeweils genau eine, genau zwei oder mehr Schaufeln umfassen können.

Beispiele für Strömungsmaschinenschaufeln sind aus dem Artikel "Blade Selection for a Modern Axial-Flow Compressor", L.C. Wright, 1. Januar 1974 und den Dokumenten WO2009103528A2 und US6572335B2 bekannt.

Ein Schaufelkranz umfasst einen Innenring und eine Mehrzahl an Schaufeln, deren eines Ende am Innenring angeordnet ist und die sich von diesem ausgehend radial nach außen erstrecken; die Bezeichnungen "radial", "axial" und "in Umfangsrichtung" beziehen sich in dieser Schrift - sofern nichts anderes angegeben ist - stets auf eine zentrale geometrische Achse des Schaufelkranzes bzw. des Innenrings, was zur besseren Lesbarkeit nicht immer extra ausformuliert ist. Sofern sich die jeweiligen Angaben auf Einzelteile des Schaufelkranzes beziehen, sind sie in Bezug auf die vorgesehene Ausrichtung des jeweiligen Einzelteils in der Strömungsmaschine zu verstehen.

Die Schaufeln weisen jeweils eine Druckseite und eine Saugseite auf. Die Druckseite jeder Schaufel ist der Saugseite einer benachbarten Schaufel zugewandt. Druckseite und Saugseite einer Schaufel sind jeweils durch einen im Betrieb der Strömungsmaschine dem axialen Hauptstrom entgegengewandten, also "anströmseitigen" Vorderbereich und einen an der entgegengesetzten Seite liegenden "abströmseitigen" Hinterbereich voneinander getrennt; der Übergang an der äußeren Oberfläche der Schaufel ist dabei vorzugsweise glatt bzw. kantenfrei ausgebildet.

Im Querschnitt orthogonal zu einer Längsachse einer Schaufel (und in einem von einer Plattform der Schaufel beabstandeten Bereich) beschreibt die äußere Oberfläche der Schaufel eine geschlossene Kurve. Deren jeweiliger Verlauf hat Einfluss auf den Wirkungsgrad der Strömungsmaschine.

Die vorliegende Erfindung hat die Aufgabe, den Wirkungsgrad einer Strömungsmaschine zu verbessern.

Die Aufgabe wird gelöst durch eine Schaufel für eine Strömungsmaschine gemäß Anspruch 1, durch einen Schaufelkranz gemäß Anspruch 7, durch ein Schaufelkranzsegment gemäß Anspruch 8 und durch eine Strömungsmaschine gemäß Anspruch 9. Vorteilhafte Ausführungsformen sind in den Unteransprüchen, der Beschreibung und den Figuren offenbart.

Eine erfindungsgemäße Schaufel für eine Strömungsmaschine weist mindestens einen Querschnitt orthogonal zu einer Schaufellängsachse auf, in dem eine äußere Oberfläche der Schaufel eine geschlossene Kurve ausbildet, die anströmseitig zwischen einem ersten und einem zweiten Ablösepunkt durchgehend entlang einer Ellipse und/oder krümmungssprungfrei näherungsweise entlang einer Ellipse verläuft und die sich im ersten Ablösepunkt krümmungssprungfrei zur Saugseite hin (bzw. an der Saugseite) sowie im zweiten (vom ersten verschiedenen) Ablösepunkt krümmungssprungfrei zur Druckseite hin (bzw. an der Druckseite) jeweils von der Ellipse bzw. der näherungsweisen Ellipse löst; der gemeinsame Abschnitt der Kurve und der Ellipse bzw. der näherungsweisen Ellipse endet also zur Saugseite hin im ersten Ablösepunkt (der insbesondere an der Saugseite liegen kann) und zur Druckseite hin im zweiten Ablösepunkt (der insbesondere an der Druckseite angeordnet sein kann).

Krümmungssprungfrei bedeutet, dass der Wert der Kurvenkrümmung der sich entlang der Kurve allenfalls stetig aber nicht sprunghaft ändert.

"Entlang einer Ellipse und/oder näherungsweise entlang einer Ellipse", was auch entlang eines Kreises und/oder näherungsweise entlang eines Kreises beinhaltet, bedeutet, dass die Kurve nicht exakt entlang eines Ellipsensegments, das im Falle eines Kreisegments eine konstante Krümmung aufweist, verlaufen muss, sondern in gewissem Maße, insbesondere nur soweit, davon abweichen kann, dass die Kurve auch durch die beiden Ablösepunkte hindurch bzw. im ersten und im zweiten Ablösepunkt krümmungssprungfrei verläuft. Dabei bedeutet näherungsweise entlang einer Ellipse , dass die Abweichung von einer bestimmten nächstkommenden Ellipsenform maximal 5% von der großen Halbachse der jeweiligen nächstkommenden Ellipse beträgt.

Im der folgenden Beschreibung wird der Einfachheit halber "Ellipse und/oder näherungsweise Ellipse" bzw. "Entlang einer Ellipse und/oder näherungsweise entlang einer Ellipse" einfacher als "Ellipse" bzw. " Entlang einer Ellipse" bezeichnet, wodurch, sofern es nicht ausdrücklich angegeben ist, der Sinngehalt jedoch nicht verändert werden soll.

Ellipse und Kurve weisen im ersten Ablösepunkt dabei vorzugsweise jeweils eine gemeinsame Tangente auf, Analoges gilt für den zweiten Ablösepunkt. Die Ellipse kann vorzugsweise insbesondere ein Kreis sein.

An der Druckseite der Schaufel hat die Kurve einen Wendepunkt, in dem sie also (ausgehend vom ersten Ablösepunkt) ihre Krümmungsrichtung (erstmalig) ändert. Der Abstand des zweiten Ablösepunktes vom Wendepunkt ist dabei entlang der Kurve mindestens genauso groß, mindestens doppelt so groß, mindestens dreimal so groß oder sogar mindestens fünfmal so groß ist wie der Abstand des zweiten Ablösepunktes vom ersten Ablösepunkt entlang der Ellipse (und damit auch entlang der Kurve); die Abstände sind also durch die Länge des jeweiligen Abschnitts der Kurve gegeben.

In einem anströmseitigen Bereich, der ausgehend vom ersten Ablösepunkt bis zum Wendepunkt an der Druckseite reicht, behält die Kurve also ihre Krümmungsrichtung bei. In einem Staupunktbereich, in dem der Druck maximal und die Geschwindigkeit der Strömung Null ist, können dadurch im Betrieb der Strömungsmaschine starke Änderungen im axialen Druckverlauf nahe an einer Anströmkante der Schaufel reduziert werden. So kann der Druckverlauf vergleichmäßigt und eine Druckseitenablösung vermieden werden. Dadurch kann eine verbesserte Umströmung zur Saugseite hin erreicht werden, wodurch ein verbesserter Wirkungsgrad erzielt werden kann.

Vorzugsweise ist in einem Abschnitt der Schaufellängsachse jeder Querschnitt der Schaufel entsprechend ausgebildet, weist also einige oder alle der oben oder auch die weiter unten beschriebenen Merkmale auf. Der Abschnitt kann vorzugsweise mindestens die halbe Länge oder mindestens zwei Drittel der Länge der Schaufel (also einer radialen Erstreckung von einer inneren zu einer radial äußeren Plattform der Schaufel) umfassen.

Erfindungsgemäß ist der Abstand des zweiten Ablösepunktes vom Wendepunkt entlang der Kurve höchstens achtmal so groß wie der Abstand des zweiten Ablösepunktes vom ersten Ablösepunkt entlang der Ellipse. Ein sich damit ergebender Bereich, in dem der Wendepunkt angeordnet ist, hat sich als besonders vorteilhaft erwiesen. Eine erste Tangente an die Ellipse (bzw. die Kurve) im ersten Ablösepunkt und eine zweite Tangente an die Ellipse (bzw. Kurve) im zweiten Ablösepunkt bilden einen Winkel, in dem die Ellipse angeordnet ist. Dieser Winkel beträgt mindestens 90°. Ein derartiger Winkel bedeutet einen relativ stumpfen anströmseitigen Vorderbereich der Schaufel (in dem Querschnitt), mit der eine in Bezug auf eine Temperaturbelastung nachteilige Materialanhäufung vermieden werden kann.

Insbesondere vorteilhaft ist eine Ausführungsform, bei der die Schaufel zumindest im Bereich des mindestens einen Querschnitts als Hohlkörper ausgebildet ist, wobei eine maximale auftretende Wandstärke der Schaufel zwischen erstem und zweitem Ablösepunkt höchstens 110%, bevorzugter höchstens 105% des Doppelten der kleinen Halbachse der Ellipse beträgt; im Falle, dass die Ellipse als Kreis ausgebildet ist, beträgt die maximale Wandstärke im genannten Bereich somit höchstens 110%, bevorzugter höchstens 105% des Durchmessers des Kreises. Als Wandstärke ist dabei in jedem Punkt zwischen erstem und zweitem Ablösepunkt der jeweils minimale Abstand zu einem Punkt an der inneren Oberfläche des Hohlkörpers zu verstehen.

Dadurch wird eine gleichmäßige Materialverteilung, insbesondere die Vermeidung einer Materialanhäufung im Bereich der Ellipse ermöglicht, was zu einer vorteilhaft geringen thermo-mechanischen Belastung führt.

Die maximal zwischen erstem und zweitem Ablösepunkt auftretende Wandstärke kann vorzugsweise wenigstens 90%, bevorzugter wenigstens 95% des Doppelten der kleinen Halbachse der Ellipse betragen. Daraus ergibt sich bei (im Sinne einer Gewichtsreduktion) vorteilhaft kleiner Wandstärke eine relativ kleine zugrundeliegende Ellipse und damit eine große Krümmung der äußeren Oberfläche in diesem Bereich

Gemäß einer bevorzugten Ausführungsform ist eine erfindungsgemäße Schaufel zumindest im Bereich des mindestens einen Querschnitts als Hohlkörper ausgebildet, wobei eine maximal auftretende Wandstärke der Schaufel zwischen erstem und zweitem Ablösepunkt höchstens 2mm, höchstens 1,5mm oder höchstens 1mm beträgt; wie erwähnt bestimmt sich die Wandstärke in jedem Punkt als der jeweils minimale Abstand des Punktes an der äußeren Oberfläche zu einem Punkt an der inneren Oberfläche des Hohlkörpers bestimmt, die "maximale Wandstärke" ist hier somit von allen Punkten zwischen den Ablösepunkten der maximal auftretende Wert für die Wandstärke.

Vorzugsweise verläuft die von der äußeren Oberfläche ausgebildete Kurve an einer Hinterkante der Schaufel (also in einem abströmseitigen Bereich) zwischen einem dritten Ablösepunkt und einem vierten Ablösepunkt durchgehend entlang einer weiteren Ellipse, insbesondere einem Kreis. Bevorzugt ist eine Ausführungsvariante, bei der die Kurve auf dem Weg vom dritten Ablösepunkt (nacheinander) über den vierten Ablösepunkt, entlang der Saugseite zum ersten Ablösepunkt, weiter über den zweiten Ablösepunkt und zum Wendepunkt durchgehend eine Krümmungsrichtung beibehält, die sich erst im genannten Wendepunkt ändert (und dann erneut in einem weiteren druckseitigen Wendepunkt).

Eine erfindungsgemäße Schaufel kann unbeweglich am Innenring fixiert oder verstellbar sein (also um eine vorgesehene, im Wesentlichen radial verlaufende Verschwenkungsachse (die vorzugsweise mit einer Längsachse der Schaufel übereinstimmt) verschwenkbar).

Ein erfindungsgemäßer Schaufelkranz umfasst einen Innenring und eine oder mehrere Schaufeln gemäß einer der in dieser Schrift offenbarten Ausführungsformen. Der Schaufelkranz kann insbesondere Teil eines Verdichters sein.

Ein erfindungsgemäßes Schaufelkranzsegment umfasst genau eine, genau zwei oder mehr Schaufeln gemäß einer oder mehrerer der vorgenannten Ausführungsformen.

Eine erfindungsgemäße Strömungsmaschine umfasst wenigstens eine Verdichter- und/oder Turbinenstufe, die mindestens einen erfindungsgemäßen Schaufelkranz gemäß einer der in dieser Schrift offenbarten Ausführungsformen umfasst. Die Strömungsmaschine kann insbesondere ein Flugzeugtriebwerk sein.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: den Verlauf einer äußeren Oberfläche einer Schaufel gemäß einer Ausführungsform der vorliegenden Erfindung im Querschnitt zusammen mit einer zugehörigen Funktionsdarstellung des Krümmungsverlaufes der äußeren Oberfläche;
- Figur 2:: Druckverläufe jeweils an Druck- und Saugseite bei herkömmlicher und erfindungsgemäßer Schaufel im Vergleich; und
- Figur 3:: einen Ausschnitt aus einem Querschnitt durch eine exemplarische erfindungsgemäße Schaufel an deren Anströmbereich mit einer äußeren und einer inneren Oberfläche.

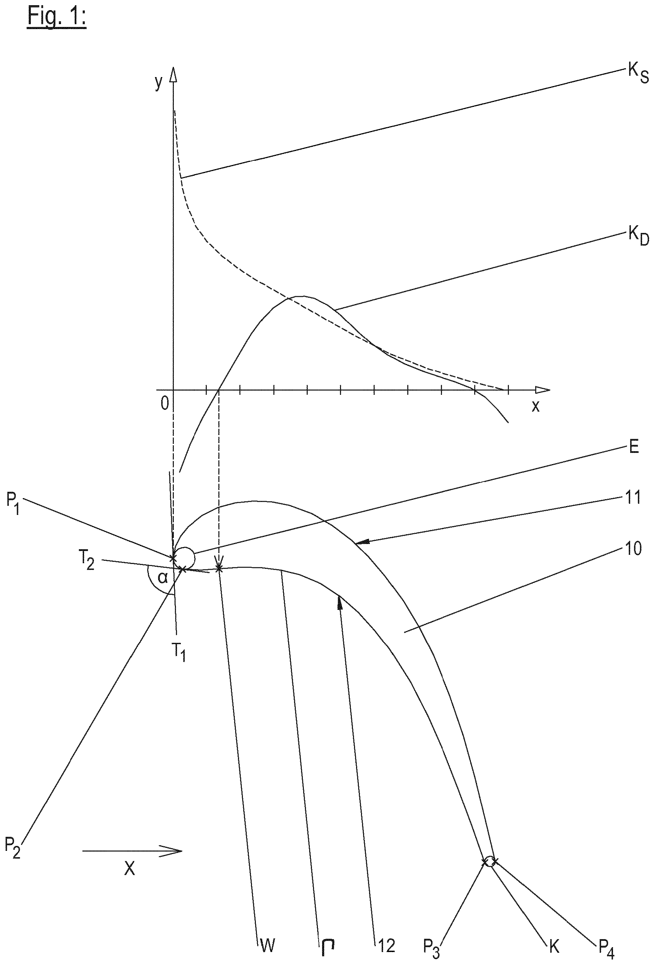

In Figur 1 ist - im unteren Bereich der Figur - schematisch eine äußere Oberfläche einer exemplarischen erfindungsgemäßen Schaufel 10 in einem Querschnitt orthogonal zu einer (nicht gezeigten) Schaufellängsachse dargestellt. Die Schaufel 10 weist eine Saugseite 11 und eine Druckseite 12 auf, eine vorgesehene Hauptromrichtung X verläuft in der Figur von links nach rechts.

Die äußere Oberfläche der gezeigten Schaufel bildet im senkrechten Querschnitt zur Schaufellängsachse eine geschlossene Kurve Γ aus, die anströmseitig entlang einer Ellipse E verläuft, die gemäß der vorgenannten Definition auch eine näherungsweise bzw. angenäherte Ellipse umfasst; im gezeigten Beispiel ist die Ellipse E als Kreis ausgebildet. Der gemeinsame Abschnitt der Kurve und der Ellipse E endet zur Saugseite der Schaufel hin in einem ersten Ablösepunkt P₁, in dem sich die Kurve Γ (bei entsprechender Durchgangsrichtung) von der Ellipse löst. In entgegengesetzter Richtung (also zur Saugseite 11 der Schaufel hin) verfolgt löst sich die Kurve Γ in einem zweiten Ablösepunkt P₂ von der Ellipse E, in dieser Richtung endet also der gemeinsame Abschnitt der Kurve Γ und der Ellipse E im zweiten Ablösepunkt P₂. Entlang des gemeinsamen Abschnitts und in den Ablösepunkt P₁ und P₂ verläuft die Kurve Γ krümmungssprungfrei, d.h. dass auch in den Bereichen der Ablösepunkt P₁ und P₂ kein Sprung bzw. keine Unstetigkeit im Krümmungsverlauf der Kurve Γ auftritt.

Eine erste Tangente T₁ an die Kurve Γ im ersten Ablösepunkt P₁ und eine zweite Tangente T₂ an die Kurve Γ im zweiten Ablösepunkt P₂ bilden einen Winkel aus, in dem die Ellipse angeordnet ist; dieser Winkel, dessen Scheitelwinkel in der Figur 1 als α gekennzeichnet ist, beträgt vorliegend mehr als 90°.

Auf diese Weise bildet die Schaufel 10 im gezeigten Querschnitt einen stumpfen anströmseitigen Vorderbereich aus.

Abströmseitig, also im Hinterbereich der Schaufel verläuft die Kurve Γ im gezeigten Beispiel zwischen einem dritten Ablösepunkt P₃ und einem vierten Ablösepunkt P₄ durchgehend entlang einer weiteren Ellipse K, die im dargestellten Ausführungsbeispiel wie die Ellipse E als Kreis ausgebildet ist. Zur Druckseite 12 hin löst sich die Kurve Γ im dritten Ablösepunkt P₃ und zur Saugseite 11 hin im vierten Ablösepunkt P₄ von der weiteren Ellipse K. In der dargestellten, vorteilhaften Ausführungsform ist die kleine Halbachse (hier also der Radius) der (ebenfalls als Kreis ausgebildeten) Ellipse E höchstens dreimal, höchstens zweieinhalbmal oder sogar höchstens doppelt so groß wie die kleine Halbachse (hier der Radius) der weiteren Ellipse K.

Ausgehend vom anströmseitigen Vorderbereich bzw. dem ersten Ablösepunkt P₁ ändert die Kurve im weiteren Verlauf in einem Wendepunkt W an der Druckseite 12 der Schaufel 10 (erstmalig) ihre Krümmungsrichtung. Dies ist insbesondere anhand der im oberen Bereich der Figur 1 dargestellten Krümmungsverläufe der Kurve Γ zu erkennen: Jeweils in Abhängigkeit von einer Ausdehnung x der Schaufel 10 an ihrer äußeren Oberfläche in der vorgesehenen Hauptstromrichtung X zeigt der in der Figur als durchgezogene Linie dargestellte Funktionsgraph K_{D} die Krümmung der Kurve Γ im Bereich der Druckseite 12, und der als gestrichelte Linie eingezeichnete Funktionsgraph K_{S} repräsentiert die Krümmung der Kurve Γ an der Saugseite 11 der Schaufel. Der erste Nulldurchgang des Funktionsgraphen K_{D} kennzeichnet den Wendepunkt W an der Druckseite 12 der Schaufel 10. Wie in der Figur zu erkennen, ist der entlang der Kurve Γ gemessene Abstand des zweiten Ablösepunktes P₂ vom Wendepunkt größer als der entlang der Kurve Γ gemessene Abstand des zweiten Ablösepunktes P₂ vom ersten Ablösepunkt P₁.

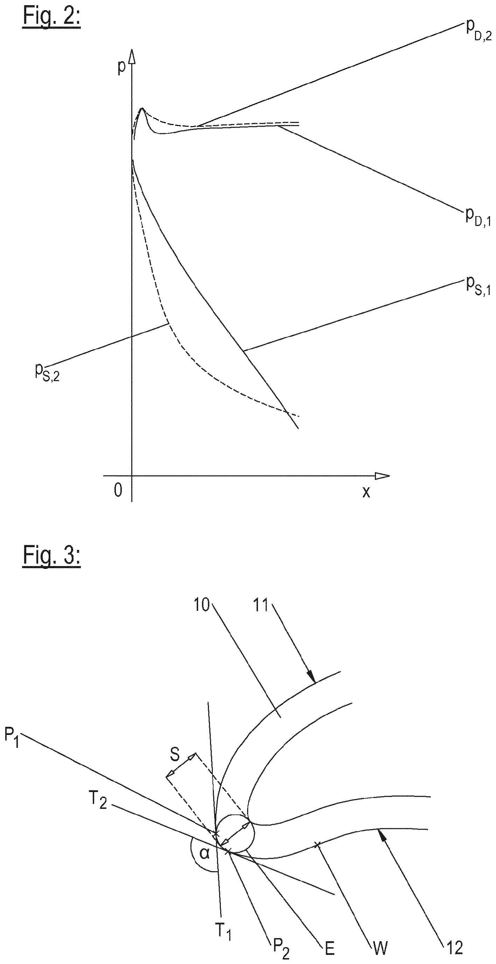

Der Wendepunkt W liegt damit relativ weit vom anströmseitigen Vorderbereich beabstandet an der Druckseite 12. Dadurch können Änderungen bzw. Unterschiede im Druckverlauf reduziert werden: Dies ist in der Figur 2 zu erkennen, in der der Druck an der Saugseite und an der Druckseite jeweils als Funktion dargestellt sind, deren Variable x die Ausdehnung der Schaufel 10 an ihrer äußeren Oberfläche in Hauptstromrichtung X repräsentiert. Die als durchgezogene Linien eingezeichneten Graphen p_{D,1} und p_{S,1} zeigen - für die Druck- bzw. die Saugseite - den Druckverlauf einer herkömmlichen Schaufel, bei der anströmseitiger Vorderbereich entlang einer Kreisbahn verläuft und bei der sich die äußere Oberfläche zur Druckseite hin in einem Wendepunkt von der Kreisbahn löst. Zu sehen ist dabei insbesondere am Graphen p_{D,1} dass an der Druckseite (bezogen auf die Hauptstromrichtung X) hinter einem Staupunkt im anströmseitigen Bereich der Schaufel (also hinter einem Punkt, in dem das durchströmende Gas den höchsten Druck und eine Geschwindigkeit von Null hat) eine starke Druckänderung auftritt.

Der erfindungsgemäß weiter hinten angeordnete Wendepunkt hingegen führt auf einen Druckverlauf, wie er durch die gestrichelt gezeichneten Graphen p_{D,2} und p_{S,2} für die Druck- bzw. die Saugseite dargestellt ist. Insbesondere zeigt der Graph p_{D,2} ein gegenüber dem herkömmlichen Verlauf p_{D,1} deutlich reduziertes Druckgefälle. Dadurch kann eine Druckseitenablösung vermieden werden, was den Wirkungsgrad erhöht.

In Figur 3 ist ein Ausschnitt aus einem Querschnitt durch eine exemplarische erfindungsgemäße Schaufel 10 an deren Anströmbereich dargestellt. Wie zu erkennen ist, ist die Schaufel in dem Bereich als Hohlkörper ausgebildet. Die äußere Oberfläche der Schaufel verläuft zwischen einem ersten Ablösepunkt P₁ und einem zweiten Ablösepunkt P₂ durchgehend entlang einer Ellipse E, die vorliegend als Kreis ausgebildet ist. Eine erste Tangente T₁ an die äußere Oberfläche im ersten Ablösepunkt P₁ und eine zweite Tangente T₂ an die äußere Oberfläche im zweiten Ablösepunkt P₂ bilden einen Winkel aus, in dem die Ellipse angeordnet ist; dieser Winkel, dessen Scheitelwinkel in der Figur als α gekennzeichnet ist, beträgt vorliegend mehr als 90°.

In jedem Punkt der äußeren Oberfläche weist die Schaufel eine Wandstärke auf, die jeweils als der minimale Abstand zu einem Punkt an der inneren Oberfläche des Hohlkörpers definiert ist; in der Figur 3 ist eine maximal zwischen erstem und zweitem Ablösepunkt P₁, P₂ auftretende Wandstärke S der Schaufel gekennzeichnet. Vorzugsweise beträgt eine derartige maximale Wandstärke höchstens 110%, bevorzugter höchstens 105% des Doppelten der kleinen Halbachse der Ellipse E; im gezeigten Beispiel ist S genauso groß wie das Doppelte der kleinen Halbachse der Ellipse E, das bei der als Kreis ausgebildeten Ellipse dessen Durchmesser ist.

Die maximale Wandstärke S kann vorzugsweise höchstens 2mm, höchstens 1,5mm oder höchstens 1mm betragen.

Offenbart ist eine Schaufel 10 für eine Strömungsmaschine. In mindestens einem Querschnitt orthogonal zu einer Schaufellängsachse bildet eine äußere Oberfläche der Schaufel eine Kurve Γ aus, die anströmseitig zwischen einem ersten Ablösepunkt P₁ und einem zweiten Ablösepunkt P₂ durchgehend entlang einer Ellipse E verläuft. An der Druckseite 12 weist die Kurve Γ einen Wendepunkt W auf. Ein Abstand des zweiten Ablösepunktes P₂ vom Wendepunkt W entlang der Kurve ist mindestens genauso groß, mindestens doppelt so groß, mindestens dreimal so groß oder sogar mindestens fünfmal so groß ist wie ein Abstand des zweiten Ablösepunktes P₂ vom ersten Ablösepunkt P₁ entlang der Ellipse E.

Offenbart sind ferner ein Schaufelkranz mit mindestens einer derartigen Schaufel sowie eine Strömungsmaschine.

### Bezugszeichen

- 10: Schaufel
- 11: Saugseite
- 12: Druckseite

- α: Scheitelwinkel zum Winkel zwischen den Tangenten T₁ und T₂, in dem die Ellipse E liegt
- Γ: im Querschnitt von der äußeren Oberfläche der Schaufel ausgebildete Kurve
- E: Ellipse (anströmseitig)
- K: Ellipse (abströmseitig)
- K_{D}: Krümmungsverlauf der äußeren Oberfläche an der Druckseite 12
- K_{S}: Krümmungsverlauf der äußeren Oberfläche an der Saugseite 11

- p_{D,1}: anströmseitiger Druckverlauf bei einer herkömmlichen Schaufel an der Druckseite
- p_{D,2}: anströmseitiger Druckverlauf bei einer erfindungsgemäßen Schaufel 10 an der Druckseite 12
- p_{S,1}: anströmseitiger Druckverlauf bei einer herkömmlichen Schaufel an der Saugseite
- p_{S,2}: anströmseitiger Druckverlauf bei einer erfindungsgemäßen Schaufel 10 an der Saugseite 11

- P₁: erster Ablösepunkt
- P₂: zweiter Ablösepunkt
- P₃: dritter Ablösepunkt
- P₄: vierter Ablösepunkt

- S: maximale Wandstärke der Schaufel zwischen erstem und zweitem Ablösepunkt
- T₁: erste Tangente
- T₂: zweite Tangente

- X: vorgesehene Hauptstromrichtung

## Patentansprüche

1. Schaufel (10) für eine Gasturbine, wobei die Schaufel mindestens einen Querschnitt orthogonal zu einer Schaufellängsachse aufweist, in dem eine äußere Oberfläche der Schaufel eine Kurve (Γ) ausbildet, die anströmseitig zwischen einem ersten Ablösepunkt (P₁) und einem zweiten Ablösepunkt (P₂) durchgehend entlang einer Ellipse (E) und/oder krümmungssprungfrei näherungsweise entlang einer Ellipse (E), wobei die Abweichung von einer bestimmten nächstkommenden Ellipsenform maximal 5% von der großen Halbachse der jeweiligen nächstkommenden Ellipse beträgt, verläuft,
wobei sich die Kurve (Γ) im ersten Ablösepunkt (P₁) zur Saugseite (11) hin und im zweiten Ablösepunkt (P₂) zur Druckseite (12) hin jeweils krümmungssprungfrei von der Ellipse (E) bzw. der näherungsweisen Ellipse (E) löst,
wobei die Kurve (Γ) ferner an der Druckseite (12) einen Wendepunkt (W) aufweist, **dadurch gekennzeichnet, dass** ein Abstand des zweiten Ablösepunktes (P₂) vom Wendepunkt (W) entlang der Kurve (Γ) mindestens genauso groß und höchstens achtmal so groß ist wie ein Abstand des zweiten Ablösepunktes (P₂) vom ersten Ablösepunkt (P₁) entlang der Ellipse bzw. der näherungsweisen Ellipse (E), wobei die Ellipse bzw. näherungsweise Ellipse (E) in einem Winkel zwischen einer ersten Tangente (T₁) an die Ellipse bzw. näherungsweise Ellipse (E) im ersten Ablösepunkt (P₁) und einer zweiten Tangente (T₂) an die Ellipse bzw. näherungsweise Ellipse (E) im zweiten Ablösepunkt (P₂) liegt, der mindestens 90° beträgt.

2. Schaufel gemäß Anspruch 1, wobei der Abstand des zweiten Ablösepunktes (P₂) vom Wendepunkt (W) entlang der Kurve (Γ) mindestens doppelt so groß, mindestens dreimal so groß oder sogar mindestens fünfmal so groß ist wie der Abstand des zweiten Ablösepunktes (P₂) vom ersten Ablösepunkt (P₁) entlang der Ellipse (E) bzw. näherungsweisen Ellipse (E).

3. Schaufel gemäß einem der vorhergehenden Ansprüche, die zumindest im Bereich des mindestens einen Querschnitts als Hohlkörper ausgebildet ist,
wobei eine maximale zwischen erstem und zweitem Ablösepunkt auftretende Wandstärke (S) der Schaufel höchstens 110%, bevorzugter höchstens 105% des Doppelten der kleinen Halbachse der Ellipse (E) bzw. der kleinen Halbachse einer zur näherungsweisen Ellipse (E) nächstkommenden Ellipse beträgt und/oder mindestens 90%, bevorzugter mindestens 95% des Doppelten dieser kleinen Halbachse.

4. Schaufel nach einem der vorhergehenden Ansprüche, die zumindest im Bereich des mindestens einen Querschnitts als Hohlkörper ausgebildet ist, wobei eine maximale zwischen erstem und zweitem Ablösepunkt auftretende Wandstärke (S) der Schaufel höchstens 2mm, höchstens 1,5mm oder höchstens 1mm beträgt.

5. Schaufel gemäß einem der vorhergehenden Ansprüche, wobei in mindestens einem Abschnitt der Schaufellängsachse jeder zu dieser orthogonale Querschnitt die im jeweiligen Anspruch jeweils genannten Merkmale aufweist.

6. Schaufel gemäß Anspruch 5, wobei der mindestens eine Abschnitt mindestens ein Drittel, mindestens eine Hälfte oder mindestens zwei Drittel der Länge der Schaufel umfasst.

7. Schaufelkranz mit einem Innenring und einer oder mehreren Schaufeln (10) gemäß einem der vorhergehenden Ansprüche.

8. Schaufelkranzsegment mit genau einer, genau zwei oder mehr Schaufeln (10) gemäß einem der Ansprüche 1 bis 6.

9. Gasturbine, insbesondere Flugtriebwerk und/oder Mantelstromflugtriebwerk, mit einer Verdichter- und/oder Turbinenstufe, die mindestens einen Schaufelkranz gemäß Anspruch 7 umfasst.

## Claims

1. Blade (10) for a gas turbine, the blade having at least one cross-section that is orthogonal to a blade longitudinal axis, in which cross-section an outer surface of the blade forms a curve (Γ) that extends on the inflow side between a first detachment point (P₁) and a second detachment point (P₂) continuously along an ellipse (E) and/orwithout abrupt changes in curvature approximately along an ellipse (E), the deviation from a specific closest ellipse shape being a maximum of 5% of the semi-major axis of the relevant closest ellipse, the curve (Γ) detaching at the first detachment point (P₁) toward the suction side (11) and at the second detachment point (P₂) toward the pressure side (12), in each case without abrupt changes in curvature, from the ellipse (E) or the approximate ellipse (E), the curve (F) also having a turning point (W) on the pressure side (12),
**characterized in that** a distance of the second detachment point (P₂) from the turning point (W) along the curve (Γ) is at least as large and at most eight times as large as a distance between the second detachment point (P₂) and the first detachment point (P₁) along the ellipse or the approximate ellipse (E), the ellipse or approximate ellipse (E) being at an angle between a first tangent (T₁) to the ellipse or approximate ellipse (E) at the first detachment point (P₁) and a second tangent (T₂) to the ellipse or approximate ellipse (E) at the second detachment point (P₂), the angle being at least 90°.

2. Blade according to claim 1, wherein the distance of the second detachment point (P₂) from the turning point (W) along the curve (┌) is at least twice as large, at least three times as large or even at least five times as large as the distance between the second detachment point (P₂) and the first detachment point (P₁) along the ellipse (E) or approximate ellipse (E).

3. Blade according to either of the preceding claims, which is designed as a hollow body at least in the region of the at least one cross-section, wherein a maximum wall thickness (S) of the blade between the first and second detachment points is at most 110%, more preferably at most 105% of double the semi-minor axis of the ellipse (E) or the semi-minor axis of an ellipse closest to the approximate ellipse (E) and/or at least 90%, more preferably at least 95% of double said semi-minor axis.

4. Blade according to any of the preceding claims, which is designed as a hollow body at least in the region of the at least one cross-section, wherein a maximum wall thickness (S) of the blade between the first and second detachment points is at most 2 mm, at most 1.5 mm or at most 1 mm.

5. Blade according to any of the preceding claims, wherein in at least one portion of the blade longitudinal axis, each cross-section orthogonal thereto has the particularfeatures mentioned in the relevant claim.

6. Blade according to claim 5, wherein the at least one portion comprises at least one third, at least one half, or at least two thirds of the length of the blade.

7. Blade ring having an inner ring and one or more blades (10) according to any of the preceding claims.

8. Blade ring segment having exactly one, exactly two, or more blades (10) according to any of claims 1 to 6.

9. Gas turbine, in particular an aircraft engine and/or turbofan aircraft engine, having a compressor stage and/orturbine stage which comprises at least one blade ring according to claim 7.

## Revendications

1. Aube (10) destinée à une turbine à gaz, l'aube présentant au moins une section transversale qui est orthogonale à un axe longitudinal d'aube et dans laquelle une surface extérieure de l'aube forme une courbe (┌) qui s'étend, du côté de l'écoulement, entre un premier point de séparation (P₁) et un second point de séparation (P₂) en continu le long d'une ellipse (E) et/ou, sans défaut de courbure, approximativement le long d'une ellipse (E), l'écart par rapport à une forme d'ellipse la plus proche spécifique étant au maximum de 5 % du grand demi-axe de l'ellipse la plus proche respective,
la courbe (┌) se séparant de l'ellipse (E) ou de l'ellipse approximative (E) respectivement, sans défaut de courbure, dans le premier point de séparation (P₁) vers le côté aspiration (11) et dans le second point de séparation (P₂) vers le côté pression (12),
la courbe (┌) présentant également un point d'inflexion (W) sur le côté pression (12), **caractérisée en ce qu'**une distance entre le second point de séparation (P₂) et le point d'inflexion (W) le long de la courbe (┌) est au moins aussi grande et au plus huit fois plus grande que la distance entre le second point de séparation (P₂) et le premier point de séparation (P₁) le long de l'ellipse ou l'ellipse approximative (E), l'ellipse ou l'ellipse approximative (E) formant un angle d'au moins 90° entre une première tangente (T₁) à l'ellipse ou à l'ellipse approximative (E) dans le premier point de séparation (P₁) et une seconde tangente (T₂) à l'ellipse ou à l'ellipse approximative (E) dans le second point de séparation (P2).

2. Aube selon la revendication 1, dans laquelle la distance entre le second point de séparation (P₂) et le point d'inflexion (W) le long de la courbe (┌) est au moins deuxfois plus grande, au moins trois fois plus grande ou même au moins cinq fois plus grande que la distance entre le second point de séparation (P₂) et le premier point de séparation (P₁) le long de l'ellipse (E) ou de l'ellipse approximative (E).

3. Aube selon l'une des revendications précédentes, qui est conçue sous la forme d'un corps creuxau moins dans la zone de l'au moins une section transversale,
une épaisseur de paroi maximale (S) de l'aube se produisant entre le premier et le second point de séparation étant d'au plus 110%, plus préférablementd'au plus 105% du double du petit demi-axe de l'ellipse (E) ou du petit demi-axe d'une ellipse la plus proche de l'ellipse approximative (E) et/ou étant d'au moins 90%, plus préférablement d'au moins 95% du double de ce petit demi-axe.

4. Aube selon l'une des revendications précédentes, qui est conçue sous la forme d'un corps creuxau moins dans la zone de l'au moins une section transversale, un e épaisseur de paroi maximale (S) de l'aube se produisant entre le premier et le second point de séparation étant d'au plus 2 mm, d'au plus 1,5 mm ou d'au plus 1 mm.

5. Aube selon l'une des revendications précédentes, dans laquelle, dans au moins une section de l'axe longitudinal d'aube, chaque section transversale orthogonale à celui-ci présente les caractéristiques mentionnées dans la revendication respective.

6. Aube selon la revendication 5, dans laquelle l'au moins une section comprend au moins un tiers, au moins la moitié ou au moins deux tiers de la longueur de l'aube.

7. Couronne d'aubes comportant une bague intérieure et une ou plusieurs aubes (10) selon l'une des revendications précédentes.

8. Segment de couronne d'aubes comportant exactement une, exactement deuxou plus aubes (10) selon l'une des revendications 1 à 6.

9. Turbine à gaz, en particulier moteur d'aéronef et/ou moteur d'aéronef à double flux, comportant un étage de compresseur et/ou de turbine qui comprend au moins une couronne d'aubes selon la revendication 7.
